# EUROPEAN PATENT SPECIFICATION

(11) **EP 3 087 426 B1**
(45) Date of publication and mention of the grant of the patent: **07.03.2018**
(21) Application number: 13828866.7
(22) Date of filing: 23.12.2013
(51) Int. Cl.: G02B 27/01, G02B 23/12, G01R 19/165

(54) **HMD CONNECTION MODULE**
HMD-VERBINDUNGSMODUL
MODULE DE CONNECTION POUR HMD

(43) Date of publication of application: 02.11.2016
(73) Proprietor: Aselsan Elektronik Sanayi ve Ticaret Anonim Sirketi, 06370 Ankara (TR)
(72) Inventor: OZSARAC, Ismail, Ankara (TR)
(74) Representative: Yamankaradeniz, Kemal
(86) International application number: PCT/IB2013/061262
(87) International publication number: WO 2015/097495

(56) References cited:
- EP-A1- 0 013 536
- EP-A1- 1 233 616
- US-A- 4 532 513
- US-A- 5 786 995
- US-A1- 2003 201 911
- US-A1- 2009 184 574

## Description

### Field of the invention

The present invention is related with an aperture to connect an HMD (Helmet Mounted Display) to platform.

### Background of the invention

The connection modules are used for different purposes in HMD systems. First of all these modules are used to connect the HMD to the platform. These modules may contain buttons or switches to control the functions of the HMD. Also, these modules contain electronics for video or audio transmissions. But, in general these modules are used to store batteries for the emergency conditions like platform power failures or surveillance outside the platform. The batteries are used to drive NVGs (Night Vision Goggle) which enables the night vision.

Pilots generally carry the connection module on their bodies during the flight. When the connection module is carried on the body, it can generate some movement problems. Also, during an emergency condition, pilots may leave the platform with HMD to use the NVGs (Night Vision Goggle); whole connection module generates additional mass for the pilots.

The USA patent application numbered US5683831 A discloses a battery pack device to which can be removably attached to a SPH-4 helmet and used to power an ANVIS night vision goggle device which is mounted on the helmet. This device is an example for the battery usage for night vision goggles. Since, this device is attached to the helmet; pilots should carry the additional mass that the device creates.

The USA patent application numbered US6448742 B1 discloses a transportable power source for an image viewing device includes a battery pack housing assembly to internally hold a first battery pack. Also, this device is another example for the battery usage for night vision goggles. Like the battery pack device at US5683831 A, this device should be carried on helmet. Document US2003201911 describes an electronic cockpit vision system including a goggle, a signal converter for mounting on a standard aircraft Dzus Rail, and an Electronic Standby Instrument System. A power supply of the required voltages is fed from an independent standby battery. The power supply can be separate or integrated with the signal converter.
Document EP1233616 describes a Head Mounted Display which communicates with a portable personal computer PC through a relay box and a PC card, which includes a DC/DC converter. Power is supplied to the PC card from an AC adaptor or a battery. Portability is provided by connecting the Head Mounted Display directly to the relay box, which carries the battery.

### Objects of the invention

The object of the invention is to provide a connection module which pilots should not need to carry on their body and which can be integrated to the platform. Another object of the invention is to reduce the additional mass which pilots should carry when they leave the platform by separating the mobile part which includes battery to supply the NVGs from the whole connection module. These objects are solved by the features of device claim 1. The dependent claims recite advantageous embodiments of the invention.

### Detailed description of the invention

HMD connection module in order to fulfill the objects of the present invention is illustrated in the attached figures, where:

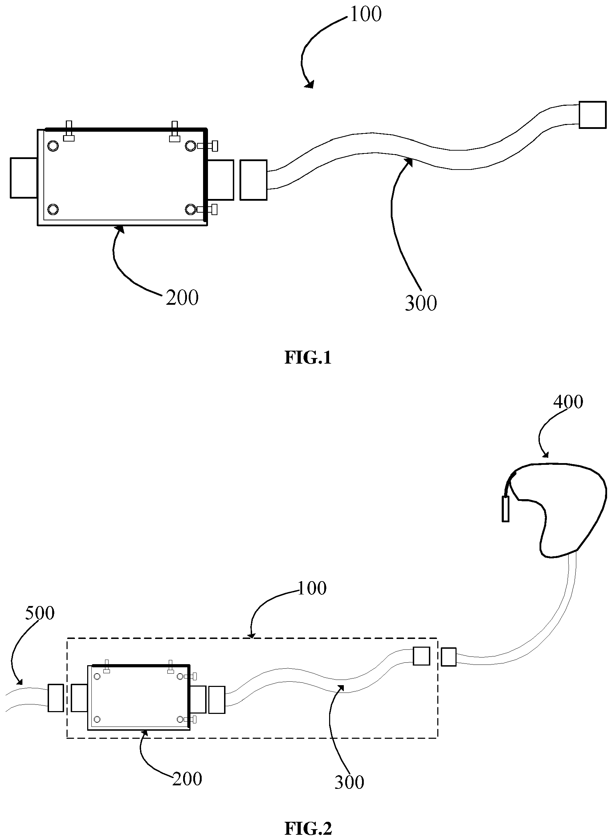

**FIG.1** shows the HMD connection module.
**FIG.2** shows the HMD connection module with the other system components.

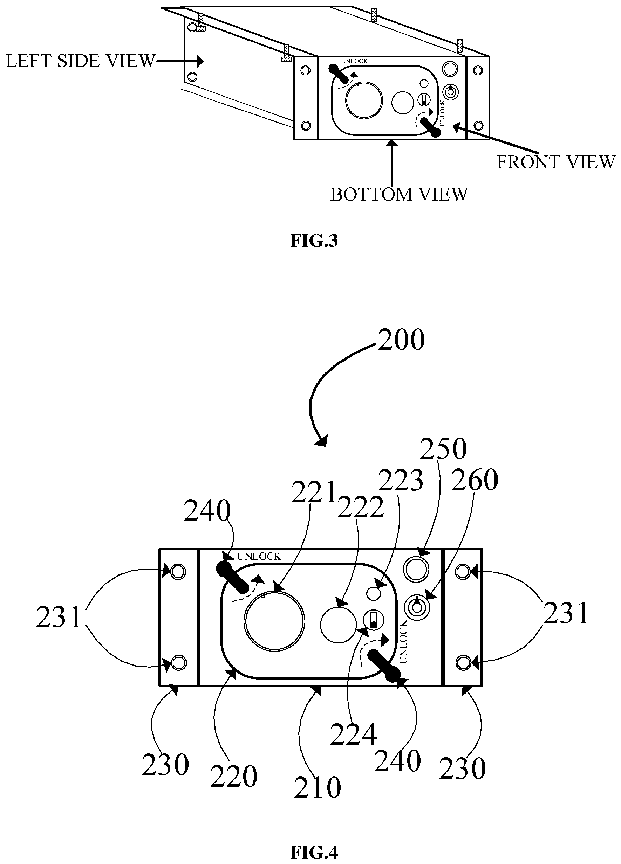

**FIG.3** shows reference views of the platform unit (PU).
**FIG.4** shows front view of the platform unit.

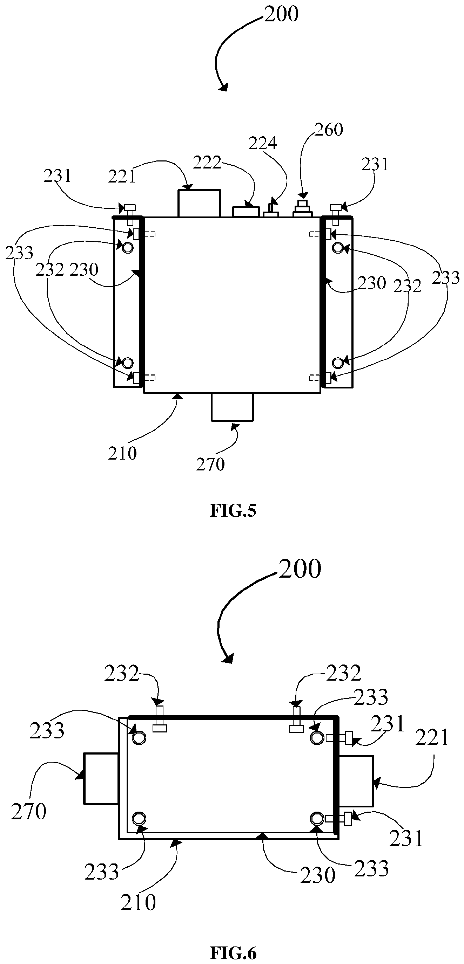

**FIG.5** shows bottom view of the platform unit.
**FIG.6** shows left side view of the platform unit.

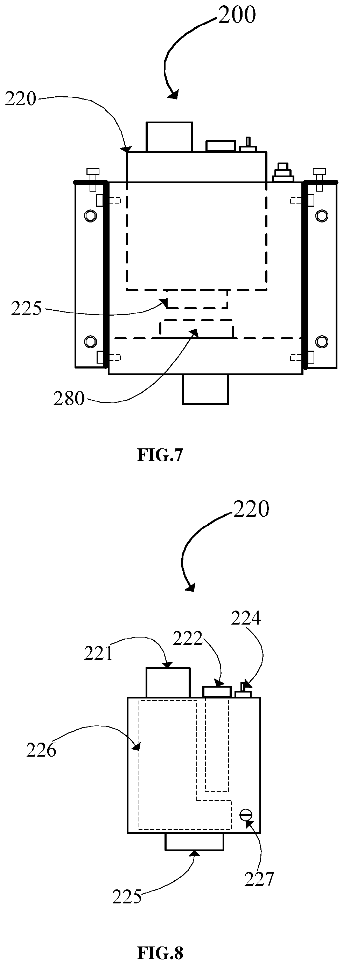

**FIG.7** shows bottom view while the PU mobile part removed.
**FIG.8** shows the PU mobile part.
**FIG.9** shows the adaptor cable.
**FIG.10** shows the horizontal and vertical platform integration of the HMD connection module.

Elements shown in the figures are numbered as follows:
100. HMD Connection Module
200. Platform Unit (PU)
   210. PU Main Body
   220. PU Mobile Part
      221. PU HMD Side Connector
      222. PU Battery Box
      223. Multi-Color LED (Light Emitting Diode)
      224. ON/OFF Switch
      225. Main Body - Mobile Part Male Connector
      226. Electronic Card
      227. Battery Warning Adjustment
   230. PU Platform Integration Part (PIP)
      231. PU Platform Integration Screw-Horizontal
      232. PU Platform Integration Screw-Vertical
      233. PU PIP- Main Body Connection Screw
   240. PU Removal Part Holder
   250. Push Button
   260. Rotary Switch
   270. PU Platform Side Connector
   280. Main Body - Mobile Part
300. Adaptor Cable (AC)
   310. AC PU Connector
   320. Cable
   330. AC HMD Connector
400. HMD
500. Platform Cable
According to a preferred embodiment of the invention, the HMD connection module (100) essentially comprises;
- at least one platform unit (PU) (200) for the platform connection,
- at least one PU main body (210),
- at least one PU mobile part (220),
- at least one PU HMD side connector (221) for HMD connection,
- at least one PU battery box (222) to carry the battery,
- at least one Multi-Color LED (223) for the battery life indication,
- at least one ON/OFF switch (224) to power the NVGs,
- at least one main body - mobile part male connector (225) to connect mobile part (220) to main body (210),
- at least one electronic card (226);
   to transfer data and power between PU HMD side connector (221) and main body - mobile part male connector (225).
   to check the battery life,
   to drive the Multi-Color LED (223) according the battery life,
- at least one battery warning adjustment (227) to adjust the battery critical energy level,
- at least one PU Platform Integration Part (PIP) (230) to integrate platform unit (200) to platform,
- at least one PU Platform Integration screw-horizontal (231) to integrate platform unit (200) horizontally to the platform,
- at least one PU Platform Integration screw-vertical (232) to integrate platform unit (200) vertically to the platform,
- at least one PU PIP- main body connection screw (233) to integrate PU Platform Integration Part (PIP) (230) to PU main body (210),
- at least one PU removal part holder (240) to hold the mobile part (220) inside the main body (210),
- at least one push button (250) to control functions of the HMD,
- at least one rotary switch (260) to control functions of the HMD,
- at least one PU platform side connector (270) for the platform cable connection
- at least one main body - mobile part female connector (280) to connect mobile part (220) to main body (210),
- at least one Adaptor Cable (AC) (300) to connect platform unit (200) to HMD (400),
- at least one AC PU connector (310) for the PU HMD Side Connector (221) connection,
- at least one cable (320) for the data and power transmission between platform unit (200) and HMD (400),
- at least one AC HMD Connector (330) for HMD connection,

HMDs contain goggles for night vision. Most of the night vision goggles (NVG) can be supplied by batteries. In HMD systems battery usage is require for two reasons;
- in normal conditions, NVGs are supplied from the platform power, but in case of a power failure; pilots may continue NVG usage by the help of the batteries.
- in some emergency cases, pilots should live the platform. During their surveillance at outside, pilots may need to use their NVGs for situational awareness. By batteries, it is also possible to use NVGs outside of the platform.

Because of the above reasons, most of the HMDs contain a module that includes battery or batteries. This module is a part of the HMD and pilots should place them on their chest or on their leg. This placement may create some movement problems.

In the preferred embodiment of the invention, HMD connection module (100) keeps the battery in the PU mobile part (220),
- During normal conditions, HMD connection module (100) supplied NVGs by the incoming power from the platform via PU platform side connector (270),
- When a power failure occurs, electronic card (226) switches NVG supply to the battery.

In the preferred embodiment of the invention, the mobile part (220) stays in the main body (210) during the normal operation,

In the preferred embodiment of the invention, the mobile part (220) can be removed from the PU (200) by bringing the PU removal part holder (240) to unlock position.
- During emergency conditions, mobile part (220) can be removed from the PU for the battery usage outside the platform.

In the preferred embodiment of the invention, PU HMD side connector (221) and AC PU connector (310) are circular connectors. The AC PU connector (310) connects/disconnects to/from the PU HMD side connector (221) by turning.
- During normal conditions, disconnect the AC PU connector (310) by turning,
- During emergency conditions, remove the mobile part (220) by pulling from the AC PU connector (310) after bringing the PU removal part holder (240) to unlock position.

In the preferred embodiment of the invention, main body - mobile part male connector (225) and main body - mobile part female connector (280) are quick release connectors to ease the mobile part (220) separation while pulling from AC PU connector (310).

In the preferred embodiment of the invention, electronic card (226) measures the remaining battery power and drive the Multi-Color LED (223);
- When the remaining power is below the battery life threshold, Multi-Color LED (223) is drive to generate red color,
- When the remaining power is above the battery life threshold, Multi-Color LED (223) is drive to generate green color,

In the preferred embodiment of the invention, battery warning adjustment (227) is a potentiometer to adjust battery life threshold,
- For the platforms where the operations may continue longer hours, the threshold should be high to prevent battery run-out during the operation,
- For the platforms where the operations end in a short time, the threshold should be low to prevent early battery change.

In the preferred embodiment of the invention, battery life threshold can be adjusted by the user via battery warning adjustment (227).

In the preferred embodiment of the invention, ON/OFF switch (224) is used to ON/OFF NVGs.

In the preferred embodiment of the invention, electronic card (226) measures the remaining battery power when the ON/OFF switch (224) changes the position. Electronic card (226) drives the Multi-Color LED (223) for three seconds after position change according to the measurement.
- When the ON/OFF switch (224) is brought to ON position from OFF position electronic card (226) measures the remaining batter power,
- When the ON/OFF switch (224) is brought to OFF position from ON position electronic card (226) measures the remaining batter power,

In the preferred embodiment of the invention, Adaptor Cable (AC) (300) is used to adjust the distance between the platform unit (200) and the HMD (400).
- According to the platform unit (200) platform integration and HMD position, the length of the cable (320) can be adjusted.

In the preferred embodiment of the invention, HMD connection module (100) can be adjusted according to the platform requests by just changing the cable (320) length.

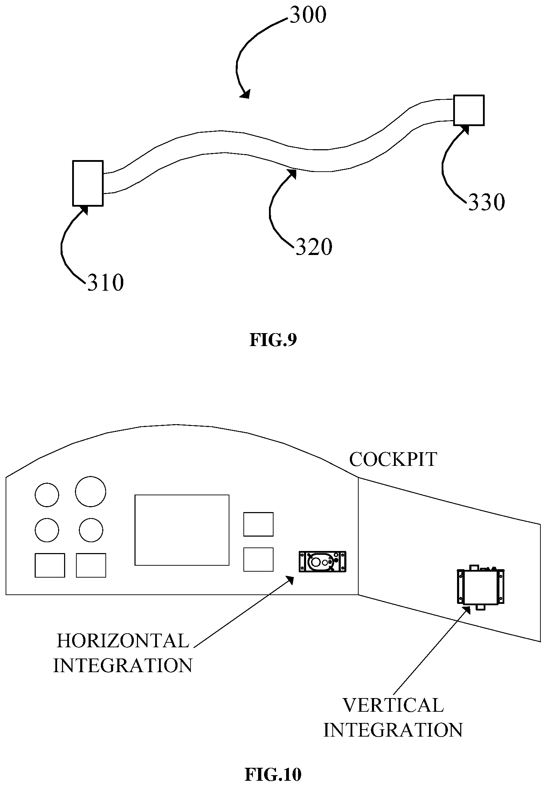

In the preferred embodiment of the invention, platform unit (200) can be integrated to the platform horizontally by PU Platform Integration Part (PIP) (230) and PU Platform Integration screw-horizontal (231) (FIG. 10)

In the preferred embodiment of the invention, platform unit (200) can be integrated to the platform vertically by PU Platform Integration Part (PIP) (230) and PU Platform Integration screw-vertical (231) (FIG. 10)

In the preferred embodiment of the invention, platform unit (200) can be carried on the pilot chest or leg by removing the PU Platform Integration Part (PIP) (230) from the platform unit (PU) (200).

In some cases due to platform restrictions platform unit (200) cannot be integrated to the platform. In such cases, pilots should carry the platform unit (200) on their body.

In the preferred embodiment of the invention, PU Platform Integration Part (PIP) (230) can be separated from the platform unit (200) via the PU PIP-main body connection screws (233).

## Claims

1. An HMD connection module (100) **comprising:**
- at least one platform unit (PU) (200) for the cockpit connection,
- at least one Adaptor Cable (AC) (300) to connect the platform unit (200) to a HMD (400), **wherein**
- the platform unit (PU) (200) comprises:
• at least one PU main body (210),
• at least one PU mobile part (220) inside the PU main body (210), which includes:
- at least one PU battery box (222) carrying a battery and which can be removed from the PU main body (210),
- at least one PU HMD side connector (221) for the HMD (400) connection,
- at least one Multi-Color LED (223) for the battery life indication,
- at least one ON/OFF switch (224) to power NVGs in the HMD (400),
- at least one main body - mobile part male connector (225) to connect the mobile part (220) to the main body (210),
- at least one electronic card (226);
- to transfer data and power between the PU HMD side connector (221) and the main body - mobile part male connector (225),
- to check the battery life,
- to drive the Multi-Color LED (223) according to the battery life,
- to switch NVG supply to the battery when a power failure occurs;
- at least one battery warning adjustment (227) to adjust the battery critical energy level,
• at least one PU Platform Integration Part (PIP) (230) to integrate the platform unit (200) to the cockpit,
• at least one PU Platform Integration screw-horizontal (231) to integrate platform unit (200) horizontally to the platform,
• at least one PU Platform Integration screw-vertical (232) to integrate platform unit (200) vertically to the platform,
• at least one PU PIP- main body connection screw (233) to integrate PU Platform Integration Part (PIP) (230) to PU main body (210),
• at least one PU removal part holder (240) on the PU main body (210) to hold the mobile part (220) inside the PU main body (210),
• at least one push button (250) to control functions of the HMD,
• at least one rotary switch (260) to control functions of the HMD,
• at least one PU platform side connector (270) on the PU main body (210) for the platform cable connection, wherein the PU platform side connector (270) supplies power to the NVGs during normal conditions,
• at least one main body - mobile part female connector (280) inside the PU main body (210) to connect the mobile part (220) to the main body (210),
- the Adaptor Cable (300) comprises:
• at least one cable (320) for the data and power transmission between platform unit (200) and the HMD (400),
• at least one AC PU connector (310) at one end of the cable (320) for the PU HMD Side Connector (221) connection,
• at least one AC HMD Connector (330) at another end of the cable (320) for the HMD connection.

2. The HMD connection module (100) in accordance with claim 1, **wherein** the PU HMD side connector (221) and the AC PU connector (310) are circular connectors, which connect/disconnect to/from the PU HMD side connector (221) by turning.

3. The HMD connection module (100) in accordance with claim 1, **wherein** the mobile part (220) can be removed from the PU (200) by pulling after bringing the PU removal part holder (240) to unlock position.

4. The HMD connection module (100) in accordance with claim 1, **wherein** the main body - mobile part male connector (225) and the main body - mobile part female connector (280) are quick release connectors to ease the mobile part (220) separation while pulling from the AC PU connector (310).

5. The HMD connection module (100) according to claim 1 **wherein** supplying NVGs from the battery or from the incoming power from the platform via PU platform side connector (270), which is controlled by the electronic card (226).

6. The HMD connection module (100) according to claim 1 **wherein** the electronic card (226) measures the remaining battery power.

7. The HMD connection module (100) according to claim 1 **wherein** the electronic card (226) drives the Multi-Color LED (223) to generate red color if the remaining power is below the pre-adjusted battery life threshold.

8. The HMD connection module (100) according to claim 1 **wherein** the electronic card (226) drives the Multi-Color LED (223) to generate green color if the remaining power is above the pre-adjusted battery life threshold.

9. The HMD connection module (100) according to claim 1 **wherein** the PU mobile part (220) further comprises a battery warning adjustment (227) which is a potentiometer to adjust battery life threshold.

10. The HMD connection module (100) according to claim 1 **wherein** the electronic card (226) measures the remaining battery power when the ON/OFF switch (224) changes the position.

11. The HMD connection module (100) according to claim 10 **wherein** the electronic card (226) drives the Multi-Color LED (223) for a predetermined time after position change according to the measurement.

12. The HMD connection module (100) in accordance with claim 1, **wherein** the platform unit (200) can be integrated to the platform horizontally or vertically by PU Platform Integration Part (PIP) (230) which comprises PU Platform Integration screw-horizontal (231) or PU Platform Integration screw vertical (232).

## Patentansprüche

1. HMD-Verbindungsmodul (100) **umfassend:**
- mindestens eine Plattformeinheit (PU) (200) für die Cockpitverbindung,
- mindestens ein Adapterkabel (AC) (300), um die Plattformeinheit (200) mit einem HMD (400) zu verbinden, **wobei**
- die Plattformeinheit (PU) (200) Folgendes umfasst:
• mindestens einen PU-Hauptkörper (210),
• mindestens ein PU-Mobilteil (220) innerhalb des PU-Hauptkörpers (210), das Folgendes beinhaltet:
- mindestens einen PU-Batteriebehälter (222), der eine Batterie trägt und der von dem PU-Hauptkörper (210) entfernt werden kann,
- mindestens einen PU-HMD-Seitenanschluss (221) für die HMD-Verbindung (400),
- mindestens eine mehrfarbige LED (223) zur Anzeige der Batterielebensdauer,
- mindestens einen EIN/AUS-Schalter (224), um die NVGs in dem HMD (400) mit Strom zu versorgen,
- mindestens einen männlichen Hauptkörper-Mobilteil-Steckverbinder (225), um das Mobilteil (220) mit dem Hauptkörper (210) zu verbinden,
- mindestens eine elektronische Karte (226);
- um Daten und Strom zwischen dem PU-HMD-Seitenanschluss (221) und dem männlichen Hauptkörper-Mobilteil-Steckverbinder (225) zu übertragen,
- um die Batterielebensdauer zu überprüfen,
- um die mehrfarbige LED (223) gemäß der Batterielebensdauer anzutreiben,
- um die NVG-Versorgung zur Batterie umzuschalten, wenn ein Stromausfall auftritt;
- mindestens eine Batteriewarneinstellung (227), um das kritische Energieniveau der Batterie einzustellen,
• mindestens ein PU-Plattform-Integrationsteil (PIP) (230), um die Plattformeinheit (200) in das Cockpit zu integrieren,
• mindestens eine PU-Plattform-Integrationshorizontalschraube (231), um die Plattformeinheit (200) horizontal in die Plattform zu integrieren,
• mindestens eine PU-Plattform-Integrationsvertikalschraube (232), um die Plattformeinheit (200) vertikal die Plattform zu integrieren,
• mindestens eine PU-PIP-Hauptkörper-Verbindungsschraube (233), um das PU-Plattform-Integrationsteil (PIP) (230) mit dem PU-Hauptkörper (210) zu verbinden,
• mindestens einen PU-Entfernungsteilhalter (240) an dem PU-Hauptkörper (210), um das Mobilteil (220) innerhalb des PU-Hauptkörpers (210) zu halten,
• mindestens einen Druckknopf (250), um Funktionen des HMD zu steuern,
• mindestens einen Drehschalter (260), um Funktionen des HMD zu steuern,
• mindestens einen PU-Plattform-Seitenanschluss (270) an dem PU-Hauptkörper (210) für die Plattformkabelverbindung, wobei der PU-Plattform-Seitenanschluss (270) die NVGs unter normalen Bedingungen mit Strom versorgt,
- mindestens einen weiblichen Hauptkörper-Mobilteil-Steckverbinder (280) innerhalb des PU-Hauptkörpers (210), um das Mobilteil (220) mit dem Hauptkörper (210) zu verbinden,
- das Adapterkabel (300) Folgendes umfasst:
• mindestens ein Kabel (320) für die Daten- und Stromübertragung zwischen der Plattformeinheit (200) und dem HMD (400),
• mindestens einen AC-PU-Anschluss (310) an einem Ende des Kabels (320) für die PU-HMD-Seitenanschlussverbindung (221),
• mindestens einen AC-HMD-Anschluss (330) an einem anderen Ende des Kabels (320) für die HMD-Verbindung.

2. HMD-Verbindungsmodul (100) nach Anspruch 1, **wobei** es sich bei dem PU-HMD-Seitenanschluss (221) als auch dem AC-PU-Anschluss (310) um einen kreisförmigen Anschluss handelt, welcher durch Drehen mit dem PU-HMD-Seitenanschluss (221) verbunden bzw. von diesem getrennt wird.

3. HMD-Verbindungsmodul (100) nach Anspruch 1, **wobei** das Mobilteil (220) von der PU (200) durch Ziehen entfernt werden kann, nachdem der PU-Entfernungsteilhalter (240) in eine Entriegelungsposition gebracht wurde.

4. HMD-Verbindungsmodul (100) nach Anspruch 1, **wobei** es sich bei dem männlichen Hauptkörper-Mobilteil-Steckverbinder (225) und dem weiblichen Hauptkörper-Mobilteil-Steckverbinder (280) jeweils um einen Schnellverschlusssteckverbinder handelt, um die Trennung des Mobilteils (220) zu erleichtern, während es aus dem AC-PU-Anschluss (310) herausgezogen wird.

5. HMD-Verbindungsmodul (100) nach Anspruch 1, **wobei** die NVGs von der Batterie oder von dem eingehenden Strom von der Plattform über den PU-Plattform-Seitenanschluss (270) versorgt werden, was durch die elektronische Karte (226) gesteuert wird.

6. HMD-Verbindungsmodul (100) nach Anspruch 1, **wobei** die elektronische Karte (226) den verbleibenden Batteriestrom misst.

7. HMD-Verbindungsmodul (100) nach Anspruch 1, **wobei** die elektronische Karte (226) die mehrfarbige LED (223) antreibt, um eine rote Farbe zu erzeugen, wenn der verbleibende Strom unterhalb des voreingestellten Schwellenwerts der Batterielebensdauer liegt.

8. HMD-Verbindungsmodul (100) nach Anspruch 1, **wobei** die elektronische Karte (226) die mehrfarbige LED (223) antreibt, um eine grüne Farbe zu erzeugen, wenn der verbleibende Strom oberhalb des voreingestellten Schwellenwerts der Batterielebensdauer liegt.

9. HMD-Verbindungsmodul (100) nach Anspruch 1, **wobei** das PU-Mobilteil (220) ferner eine Batteriewarneinstellung (227) umfasst, bei der es sich um ein Potentiometer handelt, um den Schwellenwert für die Batterielebensdauer einzustellen.

10. HMD-Verbindungsmodul (100) nach Anspruch 1, **wobei** die elektronische Karte (226) den verbleibenden Batteriestrom misst, wenn der EIN/AUS-Schalter (224) die Position wechselt.

11. HMD-Verbindungsmodul (100) nach Anspruch 10, **wobei** die elektronische Karte (226) die mehrfarbige LED (223) für eine vorbestimmte Zeit nach dem Positionswechsel gemäß der Messung antreibt.

12. HMD-Verbindungsmodul (100) nach Anspruch 1, **wobei** die Plattformeinheit (200) durch das PU-Plattform-Integrationsteil (PIP) (230) horizontal oder vertikal in die Plattform integriert werden kann, das eine PU-Plattform-Integrationshorizontalschraube (231) oder eine PU-Plattform-Integrationsvertikalschraube (232) umfasst.

## Revendications

1. Module de connexion d'un dispositif d'affichage monté sur casque (HMD) (100) **comprenant :**
- au moins une unité de plateforme (PU) (200) pour la connexion au cockpit,
- au moins un câble d'adaptateur (AC) (300) pour connecter l'unité de plateforme (200) à un HMD (400), **dans lequel**
- l'unité de plateforme (PU) (200) comprend :
• au moins un corps principal de PU (210),
• au moins une partie mobile de PU (220) à l'intérieur du corps principal de PU (210), qui inclut:
- au moins un boîtier batterie de PU (222) portant une batterie et qui peut être retiré du corps principal du PU (210),
- au moins un connecteur côté HMD de PU (221) pour la connexion du HMD (400),
- au moins une LED multicolore (223) pour l'indication de durée de vie de la batterie,
- au moins un interrupteur marche/arrêt (224) pour alimenter des NVG dans le HMD (400),
- au moins un connecteur mâle corps principal - partie mobile (225) pour connecter la partie mobile (220) au corps principal (210),
- au moins une carte électronique (226) ;
- pour transférer les données et l'alimentation entre le connecteur côté HMD du PU (221) et le connecteur mâle corps principal - partie mobile (225),
- pour vérifier la durée de vie de la batterie,
- pour commander la LED multicolore (223) en fonction de la durée de vie de la batterie,
- pour basculer l'alimentation des NVG sur la batterie quand une panne d'alimentation survient ;
- au moins un ajustement d'avertissement de la batterie (227) pour ajuster le niveau d'énergie critique de la batterie,
• au moins une partie d'intégration de plateforme (PIP) de PU (230) pour intégrer l'unité de plateforme (200) au cockpit,
• au moins une vis horizontale d'intégration de plateforme de PU (231) pour intégrer l'unité de plateforme (200) horizontalement à la plateforme,
• au moins une vis verticale d'intégration de plateforme de PU (232) pour intégrer l'unité de plateforme (200) verticalement à la plateforme,
• au moins une vis de connexion PIP - corps principal de PU (233) pour intégrer la partie d'intégration de plateforme (PIP) de PU (230) au corps principal de PU (210),
• au moins un support de partie de retrait de PU (240) sur le corps principal de PU (210) pour maintenir la partie mobile (220) à l'intérieur du corps principal de PU (210),
• au moins un bouton poussoir (250) pour commander les fonctions du HMD,
• au moins un interrupteur rotatif (260) pour commander les fonctions du HMD,
• au moins un connecteur du côté plateforme de PU (270) sur le corps principal de PU (210) pour la connexion du câble de plateforme, dans lequel le connecteur du côté plateforme de PU (270) apporte l'alimentation aux NVG lors de conditions normales,
• au moins un connecteur femelle corps principal - partie mobile (280) à l'intérieur du corps principal de PU (210) pour connecter la partie mobile (220) au corps principal (210),
- le câble adaptateur (300) comprend :
• au moins un câble (320) pour la transmission des données et de l'alimentation entre l'unité de plateforme (200) et le HMD (400),
• au moins un connecteur AC PU (310) au niveau d'une extrémité du câble (320) pour la connexion du connecteur côté HMD de PU (221),
• au moins un connecteur AC HMD (330) au niveau d'une autre extrémité du câble (320) pour la connexion du HMD.

2. Module de connexion d'un HMD (100) selon la revendication 1, **dans lequel** le connecteur du côté HMD de PU (221) et le connecteur AC PU (310) sont des connecteurs circulaires, qui se connectent/déconnectent au/du connecteur du côté HMD de PU (221) par rotation.

3. Module de connexion d'un HMD (100) selon la revendication 1, **dans lequel** la partie mobile (220) peut être retirée du PU (200) par traction après avoir amené le support de partie de retrait de PU (240) dans la position de déverrouillage.

4. Module de connexion d'un HMD (100) selon la revendication 1, **dans lequel** le connecteur corps principal - partie mobile (225) et le connecteur femelle corps principal - partie mobile (280) sont des connecteurs à décrochage rapide pour faciliter la séparation de la partie mobile (220) tandis qu'elle est tirée du connecteur AC PU (310).

5. Module de connexion d'un HMD (100) selon la revendication 1, **dans lequel** l'alimentation des NVG à partir de la batterie ou à partir de la puissance entrante depuis la plateforme via le connecteur côté plateforme de PU (270), qui est commandé par la carte électronique (226).

6. Module de connexion d'un HMD (100) selon la revendication 1, **dans lequel** la carte électronique (226) mesure la puissance restante de la batterie.

7. Module de connexion d'un HMD (100) selon la revendication 1, **dans lequel** la carte électronique (226) commande à la LED multicolore (223) de générer la couleur rouge si la puissance restante est inférieure au seuil de durée de vie pré-ajusté de la batterie.

8. Module de connexion d'un HMD (100) selon la revendication 1, **dans lequel** la carte électronique (226) commande à la LED multicolore (223) de générer la couleur verte si la puissance restante est supérieure au seuil de durée de vie pré-ajusté de la batterie.

9. Module de connexion d'un HMD (100) selon la revendication 1, **dans lequel** la partie mobile de PU (220) comprend en outre un ajustement d'avertissement de la batterie (227) qui est un potentiomètre pour ajuster le seuil de durée de vie de la batterie.

10. Module de connexion d'un HMD (100) selon la revendication 1, **dans lequel** la carte électronique (226) mesure la puissance restante de la batterie quand l'interrupteur marche/arrêt (224) change de position.

11. Module de connexion d'un HMD (100) selon la revendication 10, **dans lequel** la carte électronique (226) commande la LED multicolore (223) pendant un laps de temps prédéterminé après un changement de position en fonction de la mesure.

12. Module de connexion d'un HMD (100) selon la revendication 1, **dans lequel** l'unité de plateforme (200) peut être intégrée à la plateforme horizontalement ou verticalement par une partie d'intégration de plateforme (PIP) de PU (230) qui comprend une vis horizontale d'intégration de plateforme de PU (231) ou une vis verticale d'intégration de plateforme de PU (232).
